# EUROPEAN PATENT APPLICATION

(11) **EP 4 266 334 A1**
(43) Date of publication of application: **25.10.2023**
(21) Application number: 21906814.5
(22) Date of filing: 15.10.2021
(51) Int. Cl.: H01F 38/14, H01F 27/16, H02J 50/10, H02J 50/00, H02J 50/70, B60L 53/12

(54) **WIRELESS CHARGING DEVICE AND TRANSPORTATION MEANS COMPRISING SAME**

(30) Priority: 17.12.2020 KR 20200177092
(71) Applicant: SKC Co., Ltd., Suwon-si, Gyeonggi-do 16338 (KR)
(72) Inventor: LEE, Seunghwan, Suwon-si, Gyeonggi-do 16338 (KR); KIM, Tae Kyoung, Suwon-si, Gyeonggi-do 16338 (KR); CHOI, Jong Hak, Suwon-si, Gyeonggi-do 16338 (KR); KIM, Nah Young, Suwon-si, Gyeonggi-do 16338 (KR)
(74) Representative: Dehns
(86) International application number: PCT/KR2021/014404
(87) International publication number: WO 2022/131509

(57) **Abstract**

A wireless charging device according to an embodiment can effectively dissipate heat generated in a magnetic part without causing a short circuit of a coil part or degradation of charging efficiency by having the magnetic part placed in a cooling part separated from the coil part and circulating cooling water in the cooling part. Therefore, the wireless charging device can be usefully used in a transportation means, such as an electric vehicle, which requires high-capacity power transmission between a transmitter and a receiver.

## Description

### Technical Field

Embodiments relate to a wireless charging device and to a transportation means (vehicle) comprising the same. More specifically, the embodiments relate to a wireless charging device with enhanced charging efficiency through a heat dissipation structure and to a transportation means comprising the same such as an electric vehicle.

### Background Art

In recent years, the information and communication field is being developed at a very fast pace, and various technologies that comprehensively combine electricity, electronics, communication, and semiconductor are continuously being developed. In addition, as electronic devices tend to be more mobile, research on wireless communication and wireless power transmission technologies is being actively conducted in the communication field. In particular, research on a method for wirelessly transmitting power to electronic devices is being actively conducted.

The wireless power transmission refers to wirelessly transmitting power through space using inductive coupling, capacitive coupling, or an electromagnetic field resonance structure such as an antenna without physical contact between a transmitter that supplies power and a receiver that receives power. The wireless power transmission is suitable for portable communication devices, electric vehicles, and the like that require a large-capacity battery. Since the contacts are not exposed, there is little risk of a short circuit, and a charging failure phenomenon in a wired method can be prevented.

Meanwhile, as interest in electric vehicles has rapidly increased in recent years, interest in building charging infrastructure is increasing. Various charging methods have already appeared, such as electric vehicle charging using home chargers, battery replacement, rapid charging devices, and wireless charging devices. A new charging business model has also begun to appear (see Korean Laid-open Patent Publication No. 2011-0042403). In addition, electric vehicles and charging stations that are being tested begin to stand out in Europe. In Japan, electric vehicles and charging stations are being piloted, led by automakers and power companies.

In a conventional wireless charging device used for electric vehicles, a magnetic unit is disposed adjacent to a coil unit to enhance the wireless charging efficiency, and a metal plate for shielding is disposed to be spaced apart from the magnetic unit by a predetermined interval.

A wireless charging device generates heat due to the resistance of a coil unit and the magnetic loss of a magnetic unit during the wireless charging operation. In particular, the magnetic unit in a wireless charging device generates heat in a part close to the coil unit with a high electromagnetic wave energy density. The generated heat may change the magnetic characteristics of the magnetic unit and cause an impedance mismatch between the transmitter and receiver, which deteriorates the charging efficiency. As a result, the generation of heat is, in turn, aggravated. However, since such a wireless charging device is mainly installed in the lower part of an electric vehicle, a sealed structure is adopted for dustproofing, waterproofing, and shock absorption. Thus, it is difficult to implement a heat dissipation structure.

### [Prior Art Document]

(Patent Document 1) Korean Laid-open Patent Publication No. 2011-0042403

### Disclosure of Invention

### Technical Problem

In order to implement a heat dissipation structure of a wireless charging device, a structure in which a cooling plate is attached to a magnetic unit and a refrigerant is circulated in the cooling plate to discharge heat may be taken into consideration. In such a structure, since the refrigerant does not come into contact with the magnetic unit, it is difficult to maximize cooling efficiency. In addition, a structure in which cold air is blown into the wireless charging device for cooling may be taken into consideration. However, even if cold air comes into contact with the surface of the magnetic unit, the cooling efficiency is limited due to the low thermal conductivity of the air. In addition, if cooling water having a high thermal conductivity is simply circulated in the wireless charging device, there would be a problem in that a short circuit may be caused in the coil unit through which current flows.

As a result of research conducted by the present inventors, it has been discovered that when a magnetic unit is placed in a cooling unit separated from a coil unit and cooling water is circulated in the cooling unit, it is possible to effectively dissipate heat generated in the magnetic unit without causing a short circuit in the coil unit or a decrease in the charging efficiency.

Accordingly, the problem to be solved by the embodiment is to provide a wireless charging device that effectively dissipates heat generated from the magnetic unit and a transportation means comprising the same.

### Solution to Problem

According to an embodiment, there is provided a wireless charging device, which comprises a coil unit; a cooling unit disposed on the coil unit, comprising an inlet and an outlet, and having a sealed inner space through which cooling water is circulated; a magnetic unit disposed in the inner space of the cooling unit; and a fixing unit for fixing the magnetic unit, wherein the cooling water is supplied through the inlet, comes into thermal contact with the magnetic unit, and is discharged through the outlet.

According to another embodiment, there is provided a transportation means comprising the wireless charging device.

### Advantageous Effects of Invention

According to an embodiment, as a magnetic unit is placed in a cooling unit separated from a coil unit and cooling water is circulated in the cooling unit, it is possible to effectively dissipate heat generated in the magnetic unit without causing a short circuit in the coil unit or a decrease in the charging efficiency. In particular, since cooling water for automobiles can be used as it is, the wireless charging device may not require an additional cooler. Further, the charging efficiency and impact resistance can be enhanced and manufacturing costs can be reduced by adjusting the structure of the magnetic unit disposed in the cooling unit and the arrangement of the shield unit or the like.

Accordingly, the wireless charging device can be advantageously used in a transportation means such as electric vehicles that require large-capacity power transmission between a transmitter and a receiver.

### Brief Description of Drawings

Fig. 1 is an exploded perspective view of a wireless charging device according to an embodiment.
Figs. 2 and 3a are each a perspective view and a cross-sectional view of a wireless charging device according to an embodiment.
Figs. 3b and 3c are each a cross-sectional view of a wireless charging device according to another embodiment.
Figs. 4, 5a, and 6a are each a perspective view and a cross-sectional view of a cooling unit according to an embodiment.
Figs. 5b, 6b, 6c, 6d, and 6e are cross-sectional views of a magnetic unit according to still another embodiment.
Fig. 7 shows the heat generation temperature and charging efficiency with respect to the wireless charging time of the wireless charging devices of the Examples and Comparative Examples.
Figs. 8 and 9 show electric vehicles provided with a wireless charging device.

**<Explanation of Reference Numerals>**

| | | | |
|---|---|---|---|
| 1: | transportation means | 10: | wireless charging device |
| 15: | cooler | 16: | connection channel |
| 21: | receiver | 22: | transmitter |
| 100: | support unit | 200: | coil unit |
| 300: | magnetic unit | | |
| 310: | first magnetic unit | 320: | second magnetic unit |
| 330: | third magnetic unit | 340: | fourth magnetic unit |
| 400: | shield unit | 500: | cooling unit |
| 510: | case | 511: | lower case |
| 511a, 511b: | integrated fixing unit | | |
| 512: | lateral case | | |
| 513: | upper case | 521: | inlet |
| 522: | outlet | 530: | spacer-type fixing unit |
| 600: | housing | 600: | lower housing |
| 600: | lateral housing | 600: | upper housing |
| 700: | flow of cooling water | | |
| h1: | height spacing from an upper case to a magnetic unit | | |
| h2: | height spacing between magnetic units | | |
| h3: | height spacing from a lower case to a magnetic unit | | |
| d1: | width spacing from a lateral case to a magnetic unit | | |
| d2: | width spacing between magnetic units | | |
| W: | width of a magnetic unit | L: | length of a magnetic unit |
| t: | thickness of a magnetic unit | | |

### Best Mode for Carrying out the Invention

In the following description of the embodiments, in the case where an element is mentioned to be disposed "on" or "under" another element, it means not only that one element is directly formed "on" or "under" another element, but also that one element is indirectly disposed on or under another element with other element(s) interposed between them.

In this specification, the upper/lower relationship of the respective components is described with reference to the accompanying drawings for easy understanding. However, when an object is observed in a manner different from the drawing, it should be understood that the upper/lower relationship of the components varies depending on the direction of observation. In addition, for the sake of description, the sizes of individual elements in the appended drawings may be exaggeratedly depicted, and they may differ from the actual sizes.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

In the present specification, a singular expression is understood to encompass a singular or plural expression, interpreted in context, unless otherwise specified.

### Wireless charging device

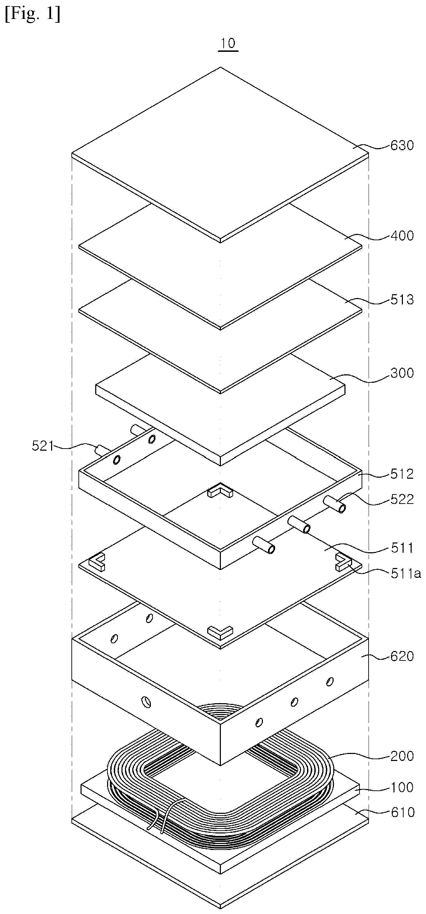

Figs. 1, 2, and 3a are each an exploded perspective view, a perspective view, and a cross-sectional view of a wireless charging device according to an embodiment.

The wireless charging device (10) according to an embodiment comprises a coil unit (200); a cooling unit (500) disposed on the coil unit (200), comprising an inlet (521) and an outlet (522), and having a sealed inner space through which cooling water is circulated; a magnetic unit (300) disposed in the inner space of the cooling unit (500); and a fixing unit (511a) for fixing the magnetic unit (300), wherein the cooling water is supplied through the inlet (521), comes into thermal contact with the magnetic unit (300), and is discharged through the outlet (522).

Hereinafter, each constitutional element of the wireless charging device will be described in detail.

### Coil unit

The coil unit (200) may comprise a conductive wire.

The conductive wire comprises a conductive material. For example, the conductive wire may comprise a conductive metal. Specifically, the conductive wire may comprise at least one metal selected from the group consisting of copper, nickel, gold, silver, zinc, and tin.

In addition, the conductive wire may have an insulating sheath. For example, the insulating sheath may comprise an insulating polymer resin. Specifically, the insulating sheath may comprise a polyvinyl chloride (PVC) resin, a polyethylene (PE) resin, a Teflon resin, a silicone resin, a polyurethane resin, or the like.

The conductive wire may have a diameter in the range of, for example, 1 mm to 10 mm, 1 mm to 5 mm, or 1 mm to 3 mm.

The conductive wire may be wound in the form of a planar coil. Specifically, the planar coil may comprise a planar spiral coil. In addition, the planar shape of the coil may be a circle, an ellipse, a polygon, or a polygonal shape with rounded corners, but it is not particularly limited thereto.

The planar coil may have an outer diameter of 5 cm to 100 cm, 10 cm to 50 cm, 10 cm to 30 cm, 20 cm to 80 cm, or 50 cm to 100 cm. As a specific example, the planar coil may have an outer diameter of 10 cm to 50 cm.

In addition, the planar coil may have an inner diameter of 0.5 cm to 30 cm, 1 cm to 20 cm, or 2 cm to 15 cm.

The number of turns of the planar coil wound may be 5 to 50 times, 10 to 30 times, 5 to 30 times, 15 to 50 times, or 20 to 50 times. As a specific example, the planar coil may be formed by winding the conductive wire 10 to 30 times.

In addition, the distance between the conductive wires in the planar coil shape may be 0.1 cm to 1 cm, 0.1 cm to 0.5 cm, or 0.5 cm to 1 cm.

Within the dimensions and specification ranges of the planar coil as described above, it can be appropriately used in the fields such as electric vehicles that require large-capacity power transmission.

### Cooling unit and fixing unit

The cooling unit (500) is disposed on the coil unit (200), comprises an inlet (521) and an outlet (522), and has a sealed inner space through which cooling water is circulated.

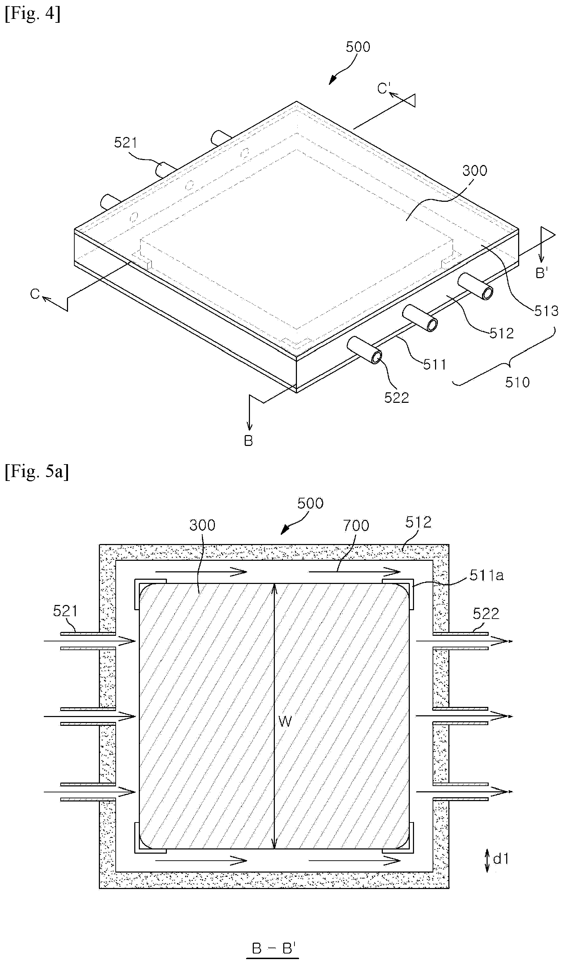

As shown in Figs. 4, 5a, and 6a, the cooling unit (500) may comprise a lower case (511), a lateral case (512), and an upper case (513), and an inlet (521) and an outlet (522) may be provided in the lateral case (512). These case components may be tightly assembled to form a sealed inner space in which cooling water is circulated.

The material of the case of the cooling unit is not particularly limited, but it preferably does not comprise a metallic material. For example, a plastic having excellent durability may be used as a material for the case of the cooling unit. Specifically, the material of the case of the cooling unit may comprise polypropylene (PP), polyethylene (PE), polymethyl methacrylate (PMMA), acrylonitrile-butadiene-styrene (ABS), polycarbonate (PC), polyethylene terephthalate (PET), polyamide (PA), polyether ether ketone (PEEK), polyimide (PI), or the like.

In addition, the inlet and outlet are not particularly limited as long as they are of a material and shape suitable for the introduction and discharge of cooling water. For example, the material of the inlet and outlet may be the same as, or different from, that of the case of the cooling unit. The directions of the inlet and the outlet preferably coincide with each other so that the cooling water flows smoothly, and they are preferably located opposite to each other. In addition, the lateral case of the cooling unit may comprise one or more, two or more, preferably three or more inlets and outlets, respectively. When there are two or more inlets and outlets, the inlets and outlets may be located facing each other while spaced apart from each other at a predetermined interval. In addition, the inlet and the outlet may have an inner diameter of 1 mm to 5 mm, specifically 2 mm to 4 mm, so that cooling water flows smoothly.

A fixing unit for fixing the magnetic unit is further disposed in the cooling unit.

The material of the fixing unit is not particularly limited, and it may be the same as, or different from, that of the case of the cooling unit. In addition, the shape of the fixing unit is not particularly limited, but it is preferably configured to fix the position of the magnetic unit and not disturb the flow of the cooling water.

For example, the fixing unit may be integrally provided in the case of the cooling unit. Referring to Figs. 1, 4, 5a, and 6a, an integrated fixing unit (511a) may be provided in the lower case (511) of the cooling unit (500). One or more integrated fixing units may be provided, and the one or more integrated fixing units may form a groove in which the magnetic unit is seated. As described above, the fixing units have a structure in which a part of the inner wall of the cooling unit protrudes and are integrally formed with the cooling unit, and the protruding structure of two or more fixing units may be combined to form a groove in which the cooling unit is seated. The integrated fixing units may be formed by molding the fixing units into a protruding shape during the molding of the case.

The fixing units not only fix the magnetic unit, but also may separate the magnetic unit from the inner wall of the cooling unit by a predetermined spacing. Specifically, the fixing unit may comprise a spacer, and the spacer may separate the magnetic unit from the lower surface of the inner space of the cooling unit. Alternatively, the spacer may separate the magnetic unit from the upper surface of the inner space of the cooling unit.

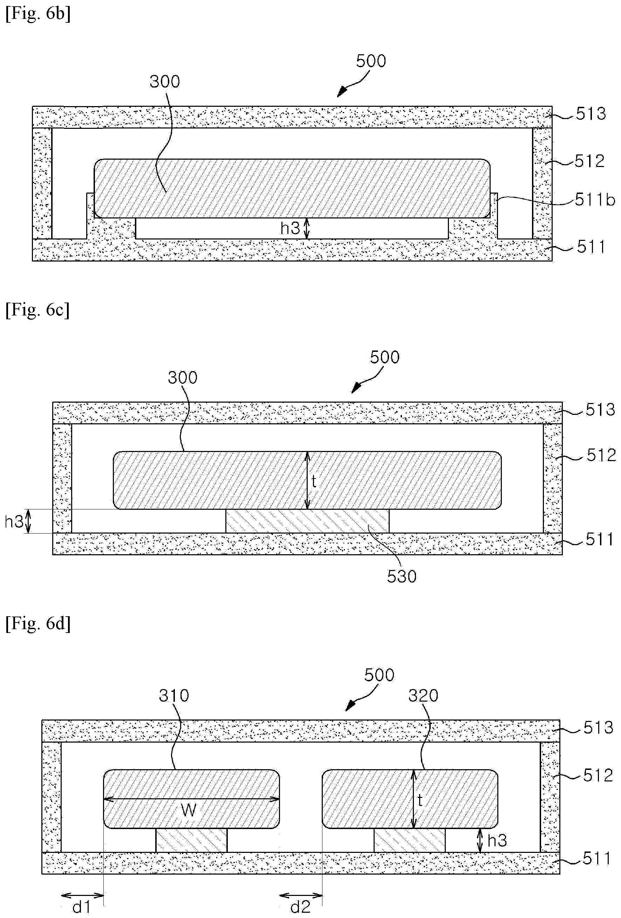

As an example, the integrated fixing unit may be configured to also serve as a spacer. As shown in Fig. 6b, the integrated fixing units (511b) formed on the lower case (511) may separate the magnetic unit (300) from the case (511) at a predetermined height spacing.

As another example, the wireless charging device may further comprise a spacer in the cooling unit, and the spacer may be used as a fixing unit for fixing the magnetic unit. Referring to Fig. 6c, the spacer-type fixing unit (530) is attached to the lower case (511), and the magnetic unit (300) is attached thereon, whereby it not only fixes the position of the magnetic unit but also separates the magnetic unit from the inner wall of the case by a certain spacing. A conventional adhesive used in wireless charging devices may be used for the attachment.

### Arrangement of the magnetic unit

The magnetic unit is disposed in the inner space of the cooling unit.

As a result, cooling water supplied into the cooling unit may come into thermal contact with the magnetic unit. Specifically, the cooling water may come into contact with the surface of the magnetic unit directly or through a thermal medium. For the thermal contact between the magnetic unit and cooling water, it is most effective that the cooling water is in direct contact with the magnetic unit for cooling thereof, but it may be in contact with the magnetic unit through a thermal medium if necessary. The material and form of the thermal medium are not particularly limited. For example, it may be made of a thermally conductive material such as a metal, and it may be applied in an appropriate form such as a coating, a case, or a pipe.

As shown in Fig. 4, the magnetic unit (300) may be disposed within the case (510) of the cooling unit (500) and, specifically, may be disposed on the lower case (511).

The magnetic unit needs to be spaced apart from the inner wall of the cooling unit by a predetermined spacing for the flow of cooling water. For example, the magnetic unit is preferably spaced apart from at least one inner wall of the cooling unit by 0.5 mm or more for the smooth flow of cooling water. Specifically, the magnetic unit may be spaced apart from at least one inner wall of the cooling unit by 1 mm or more. More specifically, the magnetic unit may be spaced apart from at least one inner wall of the cooling unit by 5 mm to 25 mm.

Referring to Fig. 5a, the width spacing (d1) from the lateral case (512) of the cooling unit to the magnetic unit (300) may be 1 mm or more, specifically 10 mm or more, and more specifically 15 mm to 25 mm. To this end, the width (w) of the magnetic unit (300) may be smaller than the width of the inner space of the cooling unit (500).

The magnetic unit may be fixed by a fixing unit to maintain the width spacing from the inner wall of the cooling unit. In addition, the fixing unit may also maintain the height spacing between the magnetic unit and the inner wall of the cooling unit.

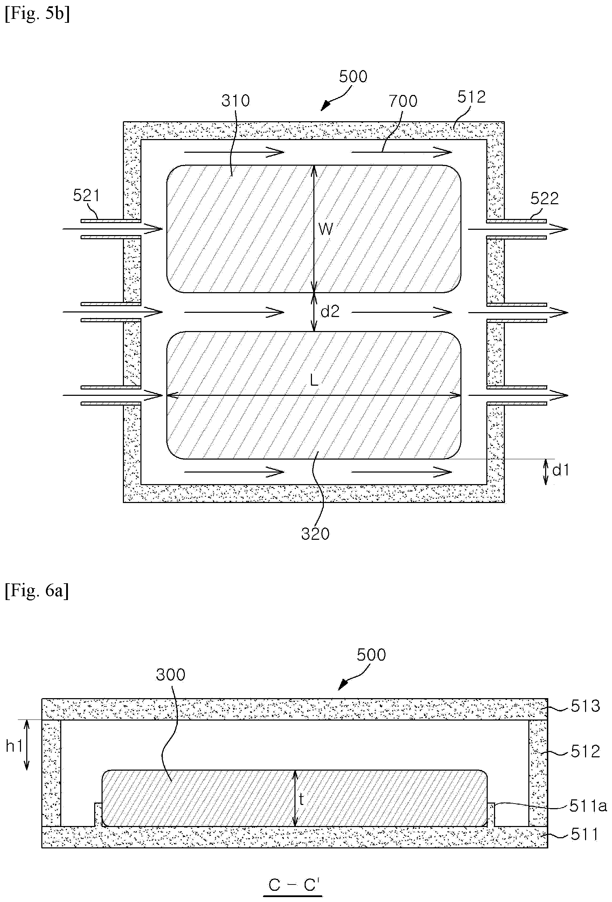

Referring to Fig. 6a, the height spacing (h1) from the upper case (513) of the cooling unit to the magnetic unit (300) may be 1 mm or more, specifically 2 mm or more, and more specifically 3 mm to 5 mm. To this end, the thickness (t) of the magnetic unit (300) may be lower than the height of the inner space of the cooling unit (500).

Referring to Figs. 6b and 6c, the height spacing (h3) from the lower case (511) of the cooling unit to the magnetic unit (300) may be 0.1 mm or more, specifically 0.2 mm or more, and more specifically 0.4 mm to 2 mm.

One, two, or more magnetic units may be provided.

For example, the magnetic unit may comprise a first magnetic unit and a second magnetic unit. In such a case, it is important to arrange the magnetic units so as not to disturb the flow of cooling water. Specifically, the cooling water may be supplied into the cooling unit in a first direction and then discharged to the outside in the first direction, and the magnetic unit may comprise a first magnetic unit and a second magnetic unit spaced apart from each other by 1 mm or more in a direction perpendicular to the first direction. Specifically, referring to Figs. 5b and 6d, the first magnetic unit (310) and the second magnetic unit (320) may be spaced apart from each other at a constant width spacing (d2) in a direction perpendicular to the flow of cooling water. The width spacing (d2) may be 1 mm or more, specifically 10 mm or more, and more specifically 15 mm to 25 mm. To this end, the sum of the widths (W) of the first magnetic unit and the second magnetic unit may be smaller than the width of the cooling unit (500), and the length (L) of the first magnetic unit and the second magnetic unit may be smaller than the length of the cooling unit (500).

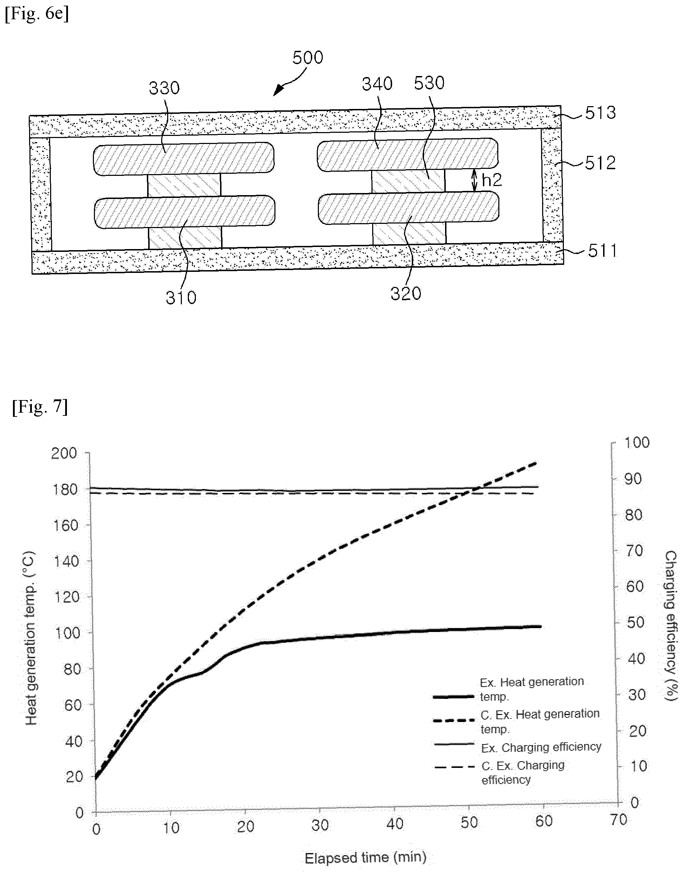

In addition, the magnetic unit has a structure in which two or more layers are stacked, and the respective layers may be spaced apart from each other by 1 mm or more. Referring to Fig. 6e, the first magnetic unit (310) and the second magnetic unit (320) are spaced apart from each other by a predetermined width spacing, and a third magnetic unit (330) and a fourth magnetic unit (340) are disposed thereon. In such a case, a spacer-type fixing unit (530) may be used. The height spacing (h2) between the magnetic units may be specifically 0.5 mm or more, more specifically 1 mm to 3 mm.

### Material and characteristics of the magnetic unit

The material of the magnetic unit is not particularly limited and may be a magnetic material used in a wireless charging device.

As an example, the magnetic unit may comprise a ferrite-based magnetic material. For example, the specific chemical formula of the ferrite-based magnetic material may be represented by MOFe₂O₃ (wherein M is one or more divalent metal elements such as Mn, Zn, Cu, and Ni). The ferrite-based magnetic material is preferably a sintered one from the viewpoint of such magnetic characteristics as magnetic permeability. The sintered magnetic material may be prepared in the form of a sheet or a block by mixing raw materials, followed by calcining, pulverizing, mixing with a binder resin, molding, and sintering. Specifically, the ferrite-based magnetic material may comprise a Ni-Zn-based, Mg-Zn-based, or Mn-Zn-based ferrite. In particular, Mn-Zn-based ferrite may exhibit high magnetic permeability, low magnetic permeability loss, and high saturation magnetic flux density over a temperature range of room temperature to 100°C or higher at a frequency of 85 kHz.

As another example, the magnetic unit may comprise a magnetic powder and a binder resin. As a result, since the magnetic powder is coupled with each other by the binder resin, the magnetic unit may have fewer defects over a large area and less damage caused by an impact. The magnetic powder may be an oxide-based magnetic powder, a metal-based magnetic powder, or a mixed powder thereof. For example, the oxide-based magnetic powder may be a ferrite-based powder, specifically, a Ni-Zn-based, Mg-Zn-based, or Mn-Zn-based ferrite powder. In addition, the metal-based magnetic powder may be a Fe-Si-Al alloy magnetic powder or a Ni-Fe alloy magnetic powder, more specifically, a sendust powder or a permalloy powder. In addition, the magnetic powder may be a nanocrystalline magnetic powder. For example, it may be a Fe-based nanocrystalline magnetic powder. Specifically, it may be a Fe-Si-Al-based nanocrystalline magnetic powder, a Fe-Si-Cr-based nanocrystalline magnetic powder, or a Fe-Si-B-Cu-Nb-based nanocrystalline magnetic powder. The magnetic powder may have an average particle diameter in the range of about 3 nm to 1 mm, about 1 µm to 300 µm, about 1 µm to 50 µm, or about 1 µm to 10 µm. The magnetic unit may comprise the magnetic powder in an amount of 10% by weight or more, 50% by weight or more, 70% by weight or more, or 85% by weight or more. For example, the magnetic unit may comprise the magnetic powder in an amount of 10% by weight to 99% by weight, 10% by weight to 95% by weight, or 50% by weight to 95% by weight. Examples of the binder resin include a polyimide resin, a polyamide resin, a polycarbonate resin, an acrylonitrile-butadiene-styrene (ABS) resin, a polypropylene resin, a polyethylene resin, a polystyrene resin, a polyphenylsulfide (PSS) resin, a polyether ether ketone (PEEK) resin, a silicone resin, an acrylic resin, a polyurethane resin, a polyester resin, an isocyanate resin, and an epoxy resin, but it is not limited thereto.

As still another example, the magnetic unit may comprise a nanocrystalline magnetic material. For example, the magnetic unit may be a Fe-based nanocrystalline magnetic material. Specifically, it may be a Fe-Si-Al-based nanocrystalline magnetic material, a Fe-Si-Cr-based nanocrystalline magnetic material, or a Fe-Si-B-Cu-Nb-based nanocrystalline magnetic material. The nanocrystalline magnetic material is prepared by, for example, a rapid solidification process (RSP) by melt-spinning a Fe-based alloy. It may be prepared by performing a zero-field thermal treatment for 30 minutes to 2 hours in a temperature range of 300°C to 700°C.

The magnetic unit may have a sheet shape or a block shape. The magnetic unit may have a thickness of 0.5 mm to 5 mm, specifically, 0.5 mm to 3 mm, 0.5 mm to 2 mm, or 1 mm to 2 mm. In addition, the magnetic unit may have an area of 200 cm² or more, 400 cm² or more, or 600 cm² or more, and 10,000 cm² or less. In addition, the magnetic unit may be configured by combining a plurality of unit magnetic materials. In such an event, the area of the individual unit magnetic materials may be 60 cm² or more, 90 cm², or 95 cm² to 900 cm².

The magnetic unit may have magnetic characteristics of a certain level in the vicinity of a standard frequency for wireless charging of an electric vehicle. The standard frequency for wireless charging of an electric vehicle may be less than 100 kHz, for example, 79 kHz to 90 kHz, specifically, 81 kHz to 90 kHz, more specifically, about 85 kHz. It is a band distinct from the frequency applied to mobile electronic devices such as cell phones. The magnetic permeability of the magnetic unit at 85 kHz may vary depending on the material. It may be 5 or more, for example, 5 to 150,000 and may specifically be in the range of 5 to 300, 500 to 3,500, or 10,000 to 150,000, depending on the specific material. In addition, the magnetic permeability loss of the magnetic unit at 85 kHz may vary depending on the material. It may be 0 or more, for example, 0 to 50,000 and may specifically be 0 to 1,000, 1 to 100, 100 to 1,000, or 5,000 to 50,000, depending on the specific material.

### Shield unit

The wireless charging device may further comprise a shield unit. The shield unit suppresses electromagnetic interference (EMI) that may be generated by the leakage of electromagnetic waves to the outside through electromagnetic shielding. The material of the shield unit may be, for example, a metal. Thus, the shield unit may be a metal plate, but it is not particularly limited thereto. As a specific example, the material of the shield unit may be aluminum. Other metals or alloy materials having an electromagnetic wave shielding capability may be used.

The shield unit may be disposed on the cooling unit or inside the cooling unit.

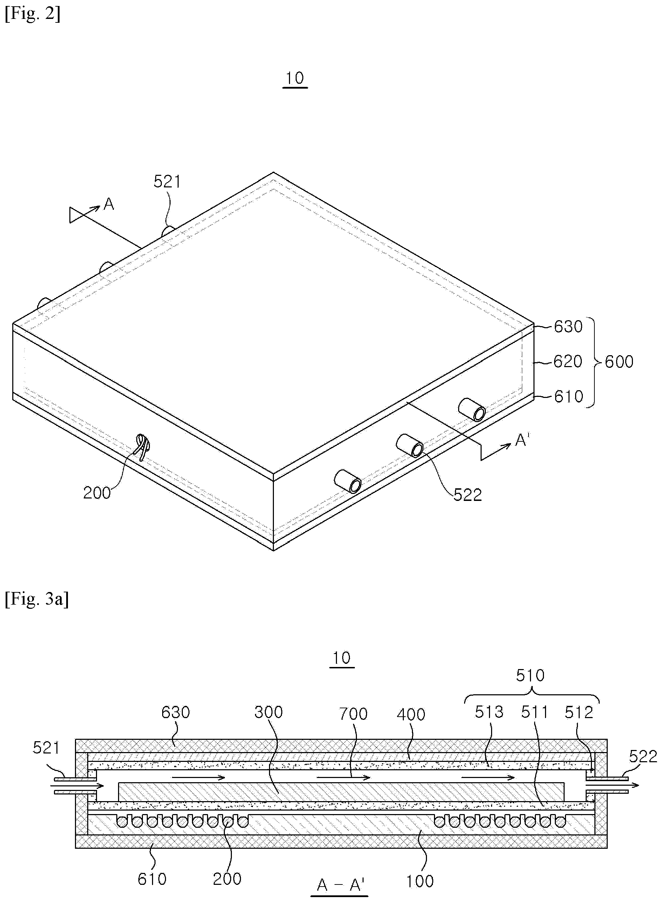

As an example, the wireless charging device may further comprise a shield unit disposed on the cooling unit. Specifically, as shown in Fig. 3a, the shield unit (400) may be disposed outside the case (510) of the cooling unit.

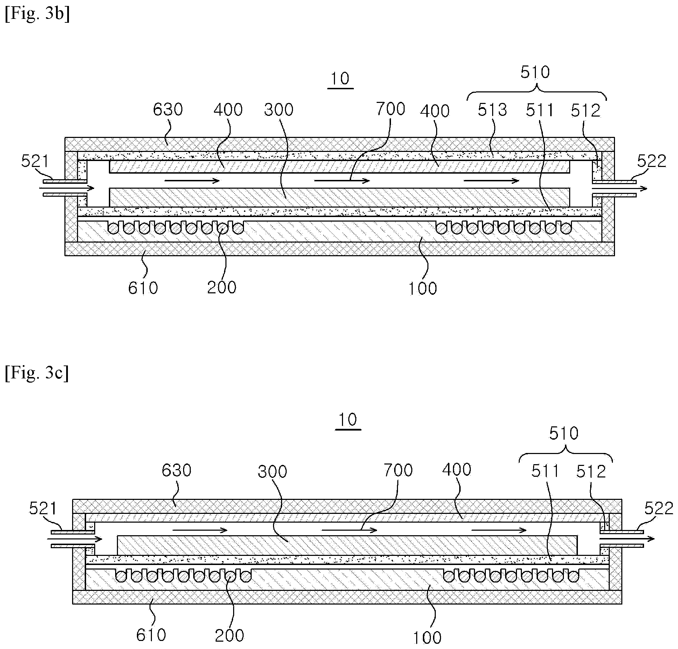

As another example, the wireless charging device may further comprise a shield unit disposed on the magnetic unit in the cooling unit, and cooling water supplied into the cooling unit may come into thermal contact with the shield unit. Specifically, the cooling water may come into contact with the surface of the shield unit directly or through a thermal medium. The material and form of the thermal medium are not particularly limited. For example, it may be made of a thermally conductive material such as a metal, and it may be applied in an appropriate form such as a coating, a case, or a pipe. As shown in Fig. 3b, the shield unit (400) may be provided inside the case (510) of the cooling unit. In such an event, the shield unit (400) and the magnetic unit (300) are spaced at a predetermined spacing for the smooth flow of the cooling water (700). For example, the spaced distance between the shield unit and the magnetic unit may be 3 mm or more, 5 mm or more, 3 mm to 10 mm, or 4 mm to 7 mm.

As still another example, the wireless charging device may further comprise a shield unit disposed on the cooling unit, and heat generated in the shield unit may be discharged to the outside by the cooling water. Specifically, as shown in Fig. 3c, a shield unit (400) may be provided instead of an upper case of the cooling unit. In such a case, heat generated from the shield unit (400) may be more effectively discharged to the outside.

The shield unit may be disposed to be spaced apart from the coil unit by a predetermined interval. For example, the spaced distance between the shield unit and the coil unit may be 10 mm or more or 15 mm or more, specifically, 10 mm to 30 mm or 10 mm to 20 mm. In addition, the shield unit may be disposed to be spaced apart from the magnetic unit by a predetermined interval.

The shield unit may have a thickness of 0.2 mm to 10 mm, 0.5 mm to 5 mm, or 1 mm to 3 mm. In addition, the shield unit may have an area of 200 cm² or more, 400 cm² or more, or 600 cm² or more.

### Other components

The wireless charging device (10) may further comprise a support unit (100) for supporting the coil unit (200). The material and structure of the support unit may be a material and structure of a conventional support unit used in a wireless charging device. The support unit may have a flat plate structure or a structure in which a groove is formed in compliance with a coil shape to fix the coil unit.

The wireless charging device may further comprise a housing for protecting the components described above. The housing protects the components of the wireless charging device, such as a coil unit, a cooling unit, a magnetic unit, and a shield unit. The material and structure of the housing may be a material and structure of a conventional housing used in a wireless charging device.

For example, as shown in Figs. 1, 2, and 3a, the housing may have a configuration in which a lower housing (610), a lateral housing (620), and an upper housing (630) are combined, but it is not particularly limited thereto.

### Heat dissipation performance

According to the embodiment described above, as a magnetic unit is placed in a cooling unit separated from a coil unit and cooling water is circulated in the cooling unit, it is possible to effectively dissipate heat generated in the magnetic unit without causing a short circuit in the coil unit or a decrease in the charging efficiency.

For example, the wireless charging device may have a heat generation temperature reduction rate of 40% or more calculated by the following equation.

Heat generation temperature reduction rate (%) = [(H1 - H2) / H1] × 100

Here, H1 is the temperature (°C) of the magnetic unit at the time of wireless charging for 60 minutes at a frequency of 85 kHz without circulating cooling water, and H2 is the temperature (°C) of the magnetic unit at the time of wireless charging for 60 minutes at a frequency of 85 kHz while circulating cooling water.

Specifically, the heat generation temperature reduction rate of the wireless charging device may be 45% or more or 50% or more, and more specifically, 40% to 70% or 45% to 60%. In addition, in the wireless charging device, the temperature (°C) of the magnetic unit at the time of wireless charging for 60 minutes at a frequency of 85 kHz while circulating cooling water may not exceed 100°C.

In particular, since cooling water for automobiles can be used as it is, the wireless charging device may not require an additional cooler. Further, the charging efficiency and impact resistance can be enhanced and manufacturing costs can be reduced by adjusting the structure of the magnetic unit disposed in the cooling unit and the arrangement of the shield unit or the like.

Accordingly, the wireless charging device can be advantageously used in a transportation means such as electric vehicles that requires large-capacity power transmission between a transmitter and a receiver.

### Transportation means

The wireless charging device can be advantageously used in a transportation means such as electric vehicles that requires large-capacity power transmission between a transmitter and a receiver.

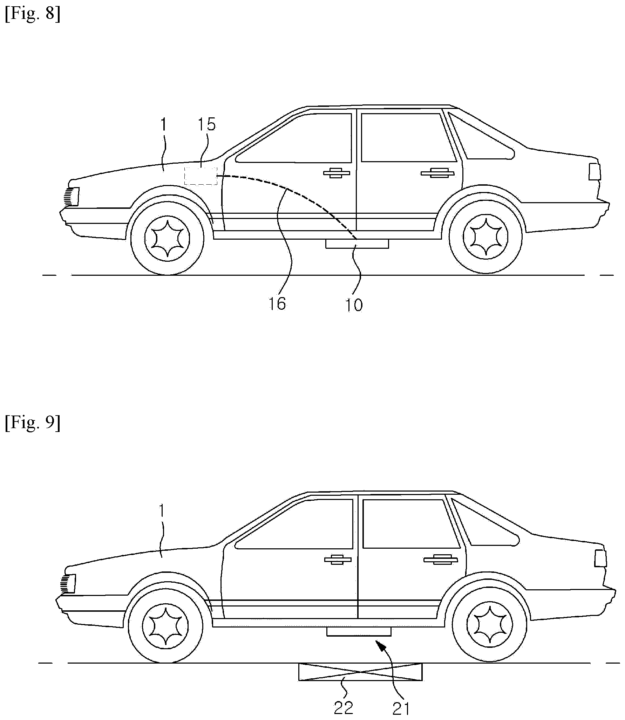

Fig. 8 shows a transportation means, specifically, an electric vehicle provided with a wireless charging device. Since it is provided with a wireless charging device on its lower side, it may be charged wirelessly in a parking area equipped with a wireless charging system for an electric vehicle.

Referring to Fig. 9, the transportation means (1) according to an embodiment comprises a wireless charging device according to the embodiment as a receiver (21). The wireless charging device may serve as a receiver for wireless charging of the transportation means (1) and may receive power from a transmitter (22) for wireless charging.

As described above, the transportation means comprises a wireless charging device, wherein the wireless charging device comprises a coil unit; a cooling unit disposed on the coil unit, comprising an inlet and an outlet, and having a sealed inner space through which cooling water is circulated; a magnetic unit disposed in the inner space of the cooling unit; and a fixing unit for fixing the magnetic unit, and the cooling water is supplied through the inlet, comes into thermal contact with the magnetic unit, and is discharged through the outlet.

The configuration and characteristics of each component of the wireless charging device adopted in the transportation means are as described above.

The wireless charging device may further comprise a cooler disposed outside the cooling unit to periodically cool the cooling water; and a connection channel for connecting the cooler and the inlet and outlet of the cooling unit so that cooling water can be circulated. In addition, the wireless charging device may further comprise a temperature sensor for sensing the temperature of the cooling water; and a controller for controlling whether to operate the cooler according to the temperature of the cooling water sensed by the temperature sensor.

Alternatively, cooling water for automobiles may be used as the cooling water supplied into the wireless charging device. In such a case, a cooler commonly provided in the electric vehicle may be used as a cooler of the wireless charging device. Specifically, as shown in Fig. 8, the cooling water cooler (15) provided inside the electric vehicle (1) and the inlet and outlet of the wireless charging device (10) may be connected through a connection channel (16). As a result, effective heat dissipation may be possible even if a separate cooler is not provided.

The transportation means may further comprise a battery for receiving power from the wireless charging device. The wireless charging device may receive power wirelessly and transmit it to the battery, and the battery may supply power to the driving system of the electric vehicle. The battery may be charged by power transmitted from the wireless charging device or other additional wired charging devices.

In addition, the transportation means may further comprise a signal transmitter for transmitting information about the charging to the transmitter of the wireless charging system. The information about such charging may be charging efficiency such as charging speed, charging state, and the like.

### Mode for the Invention

Hereinafter, the present invention is explained in more detail by the following Examples. However, the scope of the present invention is not limited thereto.

### Example

Figs. 1, 2, and 3a are each an exploded perspective view, a perspective view, and a cross-sectional view of a wireless charging device according to an embodiment. A wireless charging device was configured as shown in the above drawings. Here, the configuration of the cooling unit (500) and the magnetic unit (300) disposed therein was such that the first magnetic unit (310) and the second magnetic unit (320) were seated on the spacer-type fixing units (530) as shown in Figs. 5b and 6d. Here, the height (h3) from the lower case (511) of the cooling unit to the magnetic unit was 0.4 mm, the distance (d1) between the lateral case (512) of the cooling unit and the magnetic unit was 15 mm, and the distance (d2) between the first magnetic unit (310) and the second magnetic unit (320) was 15 mm. In addition, the first magnetic unit (310) and the second magnetic unit (320) each had a length (L) of 300 mm, a width (W) of 150 mm, and a thickness (t) of 8 mm. In addition, the size of the coil (200), the size of the shield unit (400), and the distances between the respective components were adjusted according to the charging efficiency measurement conditions of SAE J2954 WPT2 Z2 class Standard TEST.

### Comparative Example

As a comparative example, a wireless charging device was manufactured in the same manner as in the Example, except that a magnetic unit alone without a cooling unit was adopted.

### Measurement of charging efficiency

Two identical wireless charging devices were manufactured and used as a transmitter and a receiver, respectively. The current flowed through the coil unit of the transmitter, and wireless power charging at a frequency of 85 kHz and an output of 6.6 kW was carried out for 60 minutes under the SAE J2954 WPT2 Z2 class Standard TEST charging efficiency measurement conditions. In such an event, a coolant circulation tube for an automobile was connected to the inlet (521) and the outlet (522) of the cooling unit (500) of the wireless charging device (10) of the Example to circulate cooling water having an initial temperature of 25°C to the cooling unit. In contrast, in the wireless charging device of the Comparative Example, the charging efficiency was measured without circulating cooling water.

### Measurement of heat generation temperature

When the charging efficiency was measured, the temperature of the center of the surface of the magnetic unit of the wireless charging devices of the Examples and Comparative Examples was measured.

The results are shown in Tables 1 and 2 below and Fig. 7.

**[Table 1]**

| Time (min.) | Example | |
|---|---|---|
| | Heat generation temp. (°C) | Charging efficiency (%) |
| 0 | 18.9 | 90.2 |
| 9 | 66.2 | 89.5 |
| 15 | 77.6 | 89.1 |
| 18 | 86.4 | 88.8 |
| 22 | 92.1 | 88.8 |
| 24 | 92.8 | 88.7 |
| 26 | 93.6 | 88.5 |
| 29 | 94.5 | 88.4 |
| 33 | 95.4 | 88.4 |
| 38 | 96.4 | 88.3 |
| 40 | 96.9 | 88.3 |
| 46 | 97.7 | 88.3 |
| 50 | 98 | 88.3 |
| 55 | 98.4 | 88.3 |
| 60 | 98.8 | 88.3 |

**[Table 2]**

| Time (min.) | Comparative Example | |
|---|---|---|
| | Heat generation temp. (°C) | Charging efficiency (%) |
| 0 | 20 | 88.8 |
| 9 | 70 | 88.3 |
| 29 | 135 | 87.6 |
| 60 | 190 | 86.4 |

As shown in Tables 1 and 2 and Fig. 7, as the wireless charging time elapsed, the temperature of the wireless charging device of the Comparative Example continuously increased to reach 190°C. In contrast, the temperature of the wireless charging device of the Example did not rise any further around 100°C. In addition, the charging efficiency of the wireless charging device of the Example was excellent as compared with that of the Comparative Example.

## Claims

1. A wireless charging device, which comprises a coil unit; a cooling unit disposed on the coil unit, comprising an inlet and an outlet, and having a sealed inner space through which cooling water is circulated; a magnetic unit disposed in the inner space of the cooling unit; and a fixing unit for fixing the magnetic unit,
wherein the cooling water is supplied through the inlet, comes into thermal contact with the magnetic unit, and is discharged through the outlet.

2. The wireless charging device of claim 1, wherein the fixing unit comprises a spacer, and the spacer separates the magnetic unit from the lower surface of the inner space of the cooling unit.

3. The wireless charging device of claim 1, wherein the fixing unit has a structure in which a part of the inner wall of the cooling unit protrudes and is integrally formed with the cooling unit, and
the protruding structures of two or more fixing units are combined to form a groove in which the cooling unit is seated.

4. The wireless charging device of claim 1, wherein the wireless charging device has a heat generation temperature reduction rate of 40% or more calculated by the following equation:
Heat generation temperature reduction rate (%) = [(H1 - H2) / H1] × 100
wherein H1 is the temperature (°C) of the magnetic unit at the time of wireless charging for 60 minutes at a frequency of 85 kHz without circulating cooling water, and
H2 is the temperature (°C) of the magnetic unit at the time of wireless charging for 60 minutes at a frequency of 85 kHz while circulating cooling water.

5. The wireless charging device of claim 1, wherein the cooling water is supplied into the cooling unit in a first direction and then discharged to the outside in the first direction, and
the magnetic unit comprises a first magnetic unit and a second magnetic unit spaced apart from each other by 1 mm or more in a direction perpendicular to the first direction.

6. The wireless charging device of claim 1, wherein the magnetic unit has a structure in which two or more layers are stacked, and the respective layers are spaced apart from each other by 1 mm or more.

7. The wireless charging device of claim 1, wherein the magnetic unit is spaced apart from at least one inner wall of the cooling unit by 1 mm or more.

8. The wireless charging device of claim 1, wherein the wireless charging device further comprises a shield unit disposed on the magnetic unit in the cooling unit, and
the cooling water supplied into the cooling unit comes into thermal contact with the shield unit.

9. A transportation means, which comprises a wireless charging device, wherein the wireless charging device comprises a coil unit; a cooling unit disposed on the coil unit, comprising an inlet and an outlet, and having a sealed inner space through which cooling water is circulated; a magnetic unit disposed in the inner space of the cooling unit; and a fixing unit for fixing the magnetic unit,
wherein the cooling water is supplied through the inlet, comes into thermal contact with the magnetic unit, and is discharged through the outlet.

10. The transportation means of claim 9, wherein the transportation means is an electric vehicle, and the cooling water is cooling water for automobiles.
